# EUROPEAN PATENT SPECIFICATION

(11) **EP 3 184 331 B1**
(45) Date of publication and mention of the grant of the patent: **29.08.2018**
(21) Application number: 16199953.7
(22) Date of filing: 22.11.2016
(51) Int. Cl.: B60G 17/015, B60G 17/052, B60G 17/056

(54) **AIR SUSPENSION DEVICE**
LUFTFEDERUNGSVORRICHTUNG
DISPOSITIF DE SUSPENSION PNEUMATIQUE

(30) Priority: 22.12.2015 JP 2015250506
(43) Date of publication of application: 28.06.2017
(73) Proprietor: AISIN SEIKI KABUSHIKI KAISHA, Kariya-shi Aichi-ken 448-8650 (JP)
(72) Inventor: OISHI, Masaaki, Kariya-shi, Aichi-ken, 448-8650 (JP)
(74) Representative: Winter, Brandl, Fürniss, Hübner, Röss, Kaiser, Polte - Partnerschaft mbB

(56) References cited:
- EP-A1- 2 301 774
- EP-A2- 2 878 464
- DE-A1-102004 028 479
- DE-A1-102005 030 726
- DE-A1-102008 011 543
- DE-A1-102009 025 970
- DE-A1-102012 222 982
- US-A1- 2013 328 278

## Description

### TECHNICAL FIELD

This disclosure generally relates to an air suspension device.

### BACKGROUND DISCUSSION

As an air suspension device, an pressure-type impact absorbing device disclosed in JP4742146B (hereinafter referred to as Patent reference 1) is described that the air pressure-type impact absorbing device corresponds to a partially closed-type, or a closed-type air compressor (Paragraph [0002] of Patent reference 1). The air compressor sends air from an air spring to a pressure accumulator. The air from the air spring corresponds to air that is not required after reaching a predetermined amount. Similarly, compressed air may be sent to the air spring from the pressure accumulator in order to increase a height of a vehicle body relative to at least an axle. The whole devices, which are, the air spring, the pressure accumulator, a line, a valve, and the compressor, are prefilled with compressed air. The devices of a new vehicle are prefilled with compressed air during the assembling by the use of an exterior compressed air source. An outer electric controller prefills the devices and operates the valve. When the vehicle is inspected or repaired, the compressor of the vehicle prefills the devices under certain circumstances. The aforementioned closed-type air compressor is also disclosed in Fig. 9 of JP2015-98792A (hereinafter referred to as Patent reference 2) as a closed-type air suspension device, and is specifically explained in Paragraphs [0026] to [0032] of Patent reference 2.

Because the closed-type air suspension device supplies air filled within a pressure accumulation tank (a pressure accumulator) to an air spring device, the pressure level within the pressure accumulation tank is required to be higher than the pressure level of air that is to be supplied to the air spring device. In order to make the pressure level of the air that is to be supplied to the air spring device be, for example, 1.0 Mega Pascal, or 1.0 Mpa, the pressure accumulation tank is required to be supplied with higher-pressure (for example, 1.5 Mpa) compressed air from an exterior compressed air source. Accordingly, because a special apparatus, for example, a high-pressure gas cylinder or a pressure booster is normally required as the exterior compressed air source, the device may be upsizing and the maintenance of the device comes to be a great burden. In a case where the compressor device of the air suspension device is used to boost the pressure within the pressure accumulation tank (the pressure accumulator), air is generally required to be introduced and compressed by the compressor device. Accordingly, the boosting is time consuming. In this case, not only air including moisture is required to be dried with a drying agent of a dryer but also a certain ratio of air is required to be discharged via the dryer (the drying agent) for the reuse of the drying agent, this operation is inefficient and time consuming.

Further prior art can be found in EP 2 878 464 A2 (Patent reference 3) which discloses an apparatus having vehicle height adjustment units, a compressor pressure-feeding a working fluid, a valve body block formed by four valves interposed between a pressure tank, the compressor and the height adjustment units, and a control unit, wherein compressed air is guided from the air springs to the tank and back and pressure can be boosted by the compressor.

More prior art is disclosed by DE 10 2005 030 726 A1 (Patent reference 4) which comprises an air spring device with air springs, a pressure reservoir, a compressor and an external compressed air source which can be arranged either upstream or downstream of the compressor and thereby either support the compressor or allow faster prefilling.

A need thus exists for a closed-type air suspension device that supplies compressed air to a pressure accumulation tank by the use of an exterior compressed air source that supplies air having a pressure level lower than a pressure level of air that is supplied to an air spring device, and that may effectively and promptly boost compressed air to a predetermined pressure level within the pressure accumulation tank.

### SUMMARY

According to an aspect of this disclosure, an air suspension device includes an air spring device configured to be mounted on a wheel of a vehicle, the air spring device including an air chamber, a compressor device including an outlet port and a back pressure introduction port, the compressor device compressing air and discharging the compressed air from the outlet port, a pressure accumulation tank accumulating air, a first inlet and outlet on-off valve being provided at a first inlet and outlet flow passage that is disposed between a control valve and the compressor device, the control valve being provided at a second inlet and outlet flow passage, a first tank on-off valve being provided at a third inlet and outlet flow passage that is disposed between the pressure accumulation tank and the outlet port of the compressor device, a second inlet and outlet on-off valve being provided at a fourth inlet and outlet flow passage that is disposed between the control valve and the pressure accumulation tank, a second tank on-off valve being provided at the fourth inlet and outlet flow passage that is disposed between the control valve and the pressure accumulation tank, a circulation flow passage communicatingly connecting the second inlet and outlet on-off valve and the second tank on-off valve to the back pressure introduction port of the compressor device, a control unit controlling an opening and a closing of the control valve, the first and second inlet and outlet on-off valves, and the first and second tank on-off valves, and an exterior compressed air source being removable from the pressure accumulation tank, the exterior compressed air source supplying the compressed air to the pressure accumulation tank, the exterior compressed air source supplying the compressed air having a pressure level lower than a pressure level of air that is to be supplied to the air spring device. The first and second inlet and outlet passages communicatingly connect the outlet port of the compressor device to the air chamber. The exterior compressed air source is mounted on the pressure accumulation tank to supply the compressed air. The control unit controls the compressor device to boost air pressure within the pressure accumulation tank to fill the air spring device with the compressed air, the control unit controls the first and second inlet and outlet on-off valves, the first and second tank on-off valves, and the control valve to supply at least compressed air within the air spring device to the pressure accumulation tank when a pressure level of air within the air spring device comes to be greater than a predetermined pressure level, or when a vehicle height value comes to be greater than a predetermined value.

According to the aforementioned construction, the air suspension device includes the exterior compressed air source that is removable from the pressure accumulation tank and that supplies compressed air to the pressure accumulation tank. The exterior compressed air source supplies compressed air including the pressure level lower than the pressure level of air that is to be supplied to the air spring device. The exterior compressed air source is mounted on the pressure accumulation tank to supply compressed air. The control unit controls the compressor device to boost air pressure within the pressure accumulation tank to fill the air spring device with the compressed air. The control unit controls the first and second inlet and outlet on-off valves, the first and second tank on-off valves, and the control valve to supply at least compressed air within the air spring device to the pressure accumulation tank when the pressure level of air within the air spring device comes to be greater than the predetermined pressure level, or when the vehicle height value comes to be greater than the predetermined value. Accordingly, compressed air may be supplied to the pressure accumulation tank by the use of the low-pressure exterior compressed air source, and compressed air of the pressure accumulation tank may be effectively and promptly boosted to the predetermined pressure level. The exterior compressed air source supplies the compressed air to the pressure accumulation tank by using the pressure source having a pressure level lower than the pressure level of air (for example, the compressed air within a general factory) that is to be supplied to the air spring devices. Because the control unit controls the compressor device to boost the compressed air pressure to fill the air spring with the compressed air, each of the air spring devices works as a pressure accumulating chamber and the high-pressure compressed air that is desired by the pressure accumulation tank may be secured. Because the compressed air supplied from the external compressed air source to the pressure accumulation tank is used as an air being introduced to the compressor device when the air pressure of the air spring device is boosted, the compressed air may be boosted efficiently and promptly.

According to another aspect of this disclosure, the air suspension device further includes a dryer being disposed between the exterior compressed air source and the pressure accumulation tank, the dryer removing moisture of the compressed air.

According to the aforementioned construction, compressed air supplied from the exterior compressed air source to the pressure accumulation tank may be used as the air introduced to the compressor device. In a case where the dryer is disposed between the exterior compressed air source and the pressure accumulation tank, moisture of compressed air may be removed when compressed air is supplied to the pressure accumulation tank. Accordingly, compressed air may be further efficiently and promptly boosted.

According to still further aspect of this disclosure, the control valve is provided at the second inlet and outlet flow passage. The first and second inlet and outlet passages communicatingly connect the air chamber of the air spring device being mounted on the wheel to the outlet port of the compressor device. The control valve serves as a wheel on-off valve opening and closing the inlet and outlet flow passage.

In a case where the wheel on-off valve is provided at the inlet and outlet flow passage communicatingly connecting the air chamber of the air spring device that is mounted on the wheel to the outlet port of the compressor device, and serves as the wheel on-off valve opening and closing the inlet and outlet flow passage, compressed air within the pressure accumulation tank may be effectively and promptly boosted to the predetermined pressure level without any specified devices.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a block diagram illustrating a structure of an air suspension device according to an embodiment disclosed here;
Fig. 2 is a block diagram illustrating a control state in a case where an exterior compressed air source supplies compressed air;
Fig. 3 is a block diagram illustrating a control state in a case where compressed air is supplied by the exterior compressed air source while being reboosted;
Fig. 4 is a block diagram illustrating a control state in a case where air within the pressure accumulation tank is boosted after the removal of the exterior compressed air source according to the embodiment.

### DETAILED DESCRIPTION

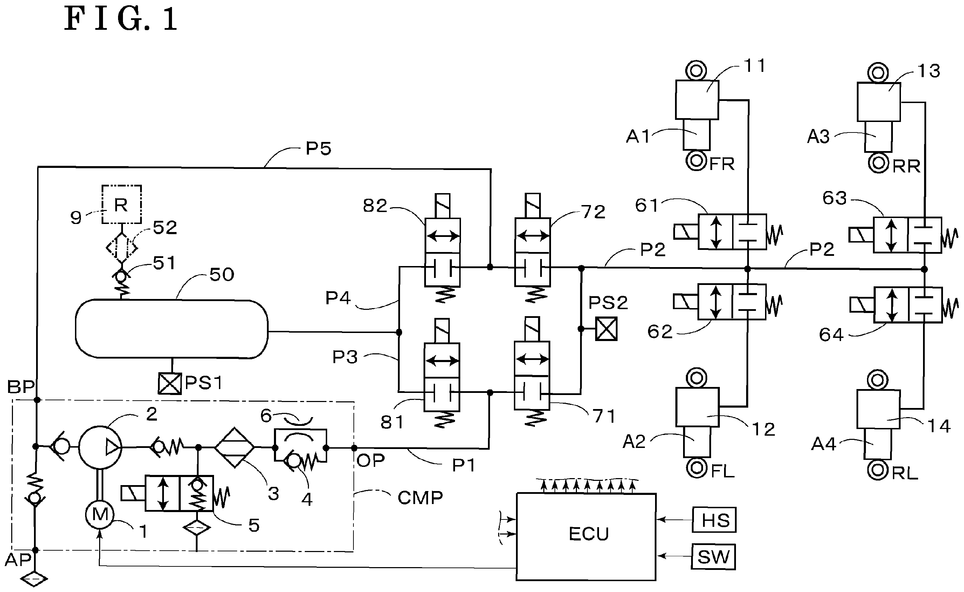

A favorable embodiment of this disclosure will hereunder be explained with reference to the drawings. First, a structure of a closed-type air suspension device according to the embodiment will be explained. In Fig. 1, a pressure accumulation tank 50 is disposed as an air pressure supply source within the air suspension device. A compressor device CMP is disposed within a frame shown with a dotted chain line in Fig. 1. That is, the compressor device CMP includes an electric motor 1, a pump device 2, and a dryer 3. The electric motor 1 serves as a drive source. The pump device 2 converts a rotary motion of the electric motor 1 into a reciprocating motion of a piston within a cylinder and generates compressed air. The dryer 3 dries and discharges the compressed air generated by the pump device 2. An outlet valve (a relief valve) 5 serving as a normally-closed magnetic on-off valve is provided at an outlet flow passage. An inlet and outlet flow passage P1 is provided with a check valve 4 allowing the flow of air in an outlet direction and preventing air from flowing in an opposite direction. An orifice 6 normally communicating with the check valve 4 via a restriction is disposed in parallel to the check valve 4. OP corresponds to an outlet port, BP corresponds to a back pressure introduction port, and AP corresponds to an air inlet port.

Four wheels (FR corresponds to a front-right wheel, FL corresponds to a front-left wheel, RR corresponds to a rear-right wheel, and RL corresponds to a rear-left wheel. In Fig. 1, only a support portion of the wheel is shown) of a vehicle include air spring devices A1, A2, A3, A4, respectively. The air spring devices A1, A2, A3, A4 include air chambers 11, 12, 13, 14, respectively. The air chambers 11, 12, 13, 14 are communicatingly connected to the compressor device CMP via the inlet and outlet flow passages P1 and P2. Each of wheel on-off valves 61, 62, 63, 64 serving as a control valve controlling the inlet and outlet of air to each of the air chambers 11, 12, 13, 14 is provided at the inlet and outlet flow passage P2 that is communicatingly connected to each of the air chambers 11, 12, 13, 14.

Furthermore, the inlet and outlet flow passage P1 that is disposed between a set of the wheel on-off valves 61, 62, 63, 64 and the compressor device CMP is provided with an inlet and outlet on-off valve 71 (i.e., serving as a first inlet and outlet on-off valve) opening and closing the inlet and outlet flow passage P1 . The inlet and outlet flow passage P3 that is disposed between the pressure accumulation tank 50 and the outlet port OP of the compressor device CMP is provided with a tank on-off valve 81 (i.e., serving as a first tank on-off valve) opening and closing the inlet and outlet flow passage P3. The inlet and outlet flow passage P4 that is disposed between the set of the wheel on-off valves 61, 62, 63, 64 and the pressure accumulation tank 50 is provided with an inlet and outlet on-off valve 72 (i.e., serving as a second inlet and outlet on-off valve) and a tank on-off valve 82 (i.e., serving as a second tank on-off valve). A portion between the inlet and outlet on-off valve 72 and the tank on-off valve 82 is connected to the back pressure introduction port BP of the compressor device CMP via a circulation flow passage P5. According to the embodiment, as shown in Fig. 1, the wheel on-off valves 61, 62, 63, 64, the inlet and outlet on-off valves 71, 72 and the tank on-off valves 81, 82 each corresponds to a normally-closed magnetic on-off valve (However, each of the wheel on-off valves 61, 62, 63, 64, the inlet and outlet on-off valves 71, 72 and the tank on-off valves 81, 82 corresponds to a relief valve when they are in a closed position). A control unit ECU controls the operation of the electric motor 1 to open and close the wheel on-off valves 61, 62, 63, 64, the inlet and outlet on-off valves 71, 72, and the tank on-off valves 81, 82. Accordingly, the control unit ECU controls the air spring devices A1, A2, A3, A4 of the wheels.

In a case where the electric motor 1 operates the pump device 2, the compressor device CMP discharges dried compressed air via the dryer 3 and the check valve 4. In a case where the electric motor 1 does not operate the pump device 2, the outlet valve 5 is closed. In a case where air is discharged via the orifice 6 and the dryer 3, the drying agent within the dryer 3 may be regenerated by the discharged air. Pressure sensors PS1, PS2 are disposed at the inlet and outlet flow passages P2, P4 (or P3), respectively. The pressure sensor PS1 detects a pressure level within the pressure accumulation tank 50. The pressure sensor PS2 detects a pressure level within the inlet and outlet flow passage P2. The pressure sensors PS1, PS2 send detected pressure signals to the control unit ECU.

Meanwhile, the pressure accumulation tank 50 is provided with a check valve (a relief valve) 51 allowing the flow of air to the pressure accumulation tank 50 and preventing air from flowing in an opposite direction. The pressure accumulation tank 50 includes an exterior compressed air source 9 that is removably disposed (thus, the exterior compressed air source 9 is illustrated with a two-dotted line in Fig. 1) via a dryer 52. The exterior compressed air source 9 of the embodiment corresponds to a general pressure source (representatively shown in R) having a comparatively low pressure level (for example, 0.5 MPa) that is generally used in a factory. The outlet pressure level of the exterior compressed air source 9 is lower than the pressure level of air that is supplied to the air spring devices A1, A2, A3, A4. In a case where the compressed air supplied from the exterior compressed air source 9 is dry, the dryer 52 does not have to be provided.

A vehicle height control operation and a regenerating operation of the drying agent of the air suspension device of the embodiment that are generally performed will be explained. Then, the operation of the exterior compressed air source 9 when supplying compressed air to the pressure accumulation tank 50 will be explained. First, in a case where the desired amount of compressed air is provided within the accumulated tank 50, as shown in Fig. 1, each of the on-off valves, that are, the wheel on-off valves 61, 62, 63, 64, the inlet and outlet on-off valves 71, 72 and the tank on-off valves 81, 82, is in a closed position and the electric motor 1 is not operated (is in a stationary state). The control unit ECU controls the opening and closing of the on-off valves in response to detected signals of a vehicle height sensor HS and to the operation of a manual switch SW.

For example, when the control unit ECU detects a command to increase the vehicle height, the control unit ECU controls each of the inlet and outlet on-off valve 72, the tank on-off valve 82, and the wheel on-off valves 61, 62, 63, 64 to be opened in a case where the detection pressure level of the pressure sensor PS1 is equal to or greater than a first predetermined pressure level. The compressed air within the pressure accumulation tank 50 is supplied to the air chambers 11, 12, 13, 14 via the inlet and outlet flow passages P4, P2. Accordingly, the air chambers 11, 12, 13, 14 are expanded and the vehicle height is increased. In a case where the vehicle height value reaches a targeted vehicle height value, the control unit ECU controls the inlet and outlet on-off valve 72, the tank on-off valve 82, and the wheel on-off valves 61, 62, 63, 64 to be closed. During the time, in a case where the detected pressure level of the pressure sensor PS1 comes to be below a second predetermined pressure level, the control unit ECU controls the electric motor 1 to be operated while closing the inlet and outlet on-off valve 71. Accordingly, compressed air is supplied from the outlet portion OP to the inlet and outlet flow passage P2 until the vehicle height value reaches the targeted vehicle height value.

On the other hand, as shown in Fig. 1, in a case where the control unit ECU detects a command to decrease the vehicle height, the control unit ECU controls each of the wheel on-off valves 61, 62, 63, 64, the outlet on-off valve 72, and the tank on-off valve 81 to be opened, and the electric motor 1 to be operated. Accordingly, the compressed air of the air chambers 11, 12, 13, 14 is supplied to the pressure accumulation tank 50 via the inlet and outlet flow passage P2, a circulation flow passage P5, the pump device 2, the dryer 3, the check valve 4, and the tank on-off valve 81. Accordingly, the sizes of the air chambers 11, 12, 13, 14 are decreased and the vehicle height is decreased, and the compressed air is accumulated within the pressure accumulation tank 50. When the vehicle height value reaches the targeted vehicle height value, the control unit ECU controls the electric motor 1 to stop operating and controls the wheel on-off valves 61, 62, 63, 64, the inlet and outlet on-off valve 72, and a tank on-off valve 81 to be closed.

In a case where the drying agent within the dryer 3 is desired to be regenerated irrespective of the operation of the vehicle height adjustment, the control unit ECU controls the tank on-off valve 81 and the outlet valve 5 to be opened. Accordingly, the dried air within the pressure accumulation tank 50 is discharged via the orifice 6 and the dryer 3. When the dried air is discharged, the drying agent within the dryer 3 is regenerated. After the regeneration, the control unit ECU controls the outlet valve 5 to be closed. In a case where the control unit ECU controls the electric motor 1 to be operated, air is entered from the air inlet port AP. The compressed air generated by the pump device 2 is supplied from the outlet port OP to the pressure accumulation tank 50 via the tank on-off valve 81 that is open. In a case where the detected pressure level of the pressure sensor PS1 comes to be equal to or greater than a third predetermined pressure level, the control unit ECU controls the electric motor 1 to be operated while controlling the tank on-off valve 81 to be closed. Accordingly, the pressure accumulation tank 50 is returned to a high-pressure maintaining state.

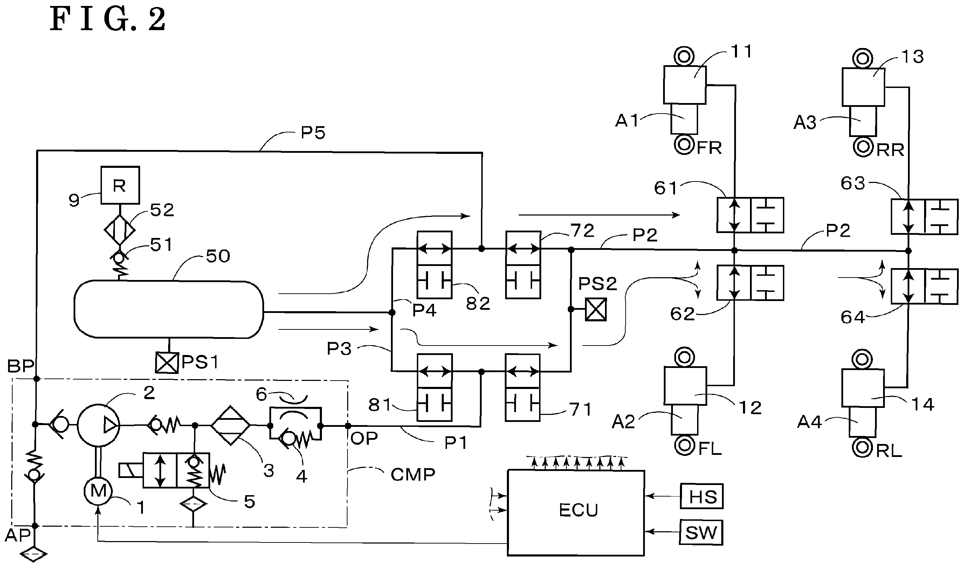

In a case where the compressed air is desired to be supplied to the pressure accumulation tank 50 by the exterior compressed air source 9, the exterior compressed air source 9 is connected to the check valve 51 (via the dryer 52 if required). In this state, as shown in Fig. 2, the control unit ECU controls the inlet and outlet on-off valves 71, 72, the tank on-off valves 81, 82, and the wheel on-off valves 61, 62, 63, 64 to be opened. Accordingly, the compressed air supplied from the exterior compressed air source 9 to the pressure accumulation tank 50 is filled in the air spring devices A1, A2, A3, A4 via the inlet and outlet flow passages P3, P4 and the inlet and outlet flow passage P2 as shown in thin arrows in Fig. 2.

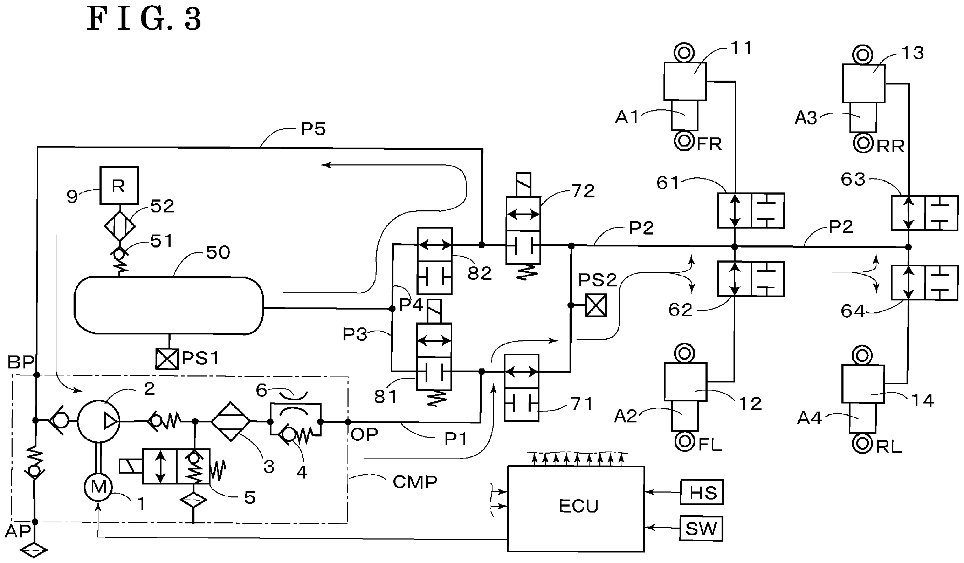

Next, as shown in Fig. 3, the control unit ECU controls the electric motor 1 to be operated while contolling the inlet and outlet on-off valve 72 and the tank on-off valve 81 to be returned to respective normal positions in Fig. 1. Accordingly, the compressed air that has a pressure level equal to or greater than the pressure level of the compressed air supplied from the exterior compressed air source 9 (for example, 1.0 MPa that exceeds the general pressure level of the air chambers 11, 12, 13, 14) is discharged from the compressor device CMP. As shown in thin arrows in Fig. 3, the compressed air is filled within the air spring devices A1, A2, A3, A4 via the inlet and outlet flow passage P1, the inlet and outlet on-off valve 71 that is open, the inlet and outlet flow passage P2 and the wheel on-off valves 61, 62, 63, 64 that are open. Here, because the compressed air (the pressure level of 0.5 MPa) within the pressure accumulation tank 50 is introduced to the back pressure introduction port BP of the compressor device CMP via the inlet and outlet flow passage P4, the open tank on-off valve 82, and the circulation flow passage P5, the compressed air may be effectively and promptly boosted (until the pressure level comes to be 1.0 MPa). Because the compressed air is continuously supplied to the pressure accumulation tank 50 from the exterior compressed air source 9 in a state where the pressure accumulation tank 50 is connected to the exterior compressed air source 9, the amount of air does not run short. The filled pressure level at this time is set in accordance with the amount of air desired after the reset of the normal operation mode.

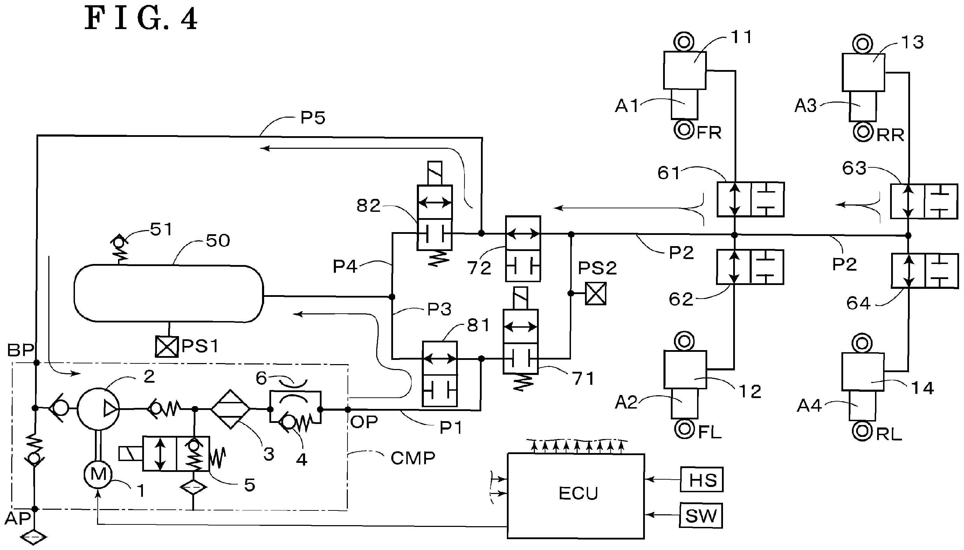

In a case where the air spring devices A1, A2, A3, A4 are boosted (thus, the vehicle height is high), the exterior compressed air source 9 (and the dryer 52) is removed from the pressure accumulation tank 50, and comes to be a state shown in Fig. 4. Here, the air within the air spring devices A1, A2, A3, A4 is greater than a predetermined pressure level (or the vehicle height value is greater than a predetermined value). In a case where the pressure levels of the air spring devices A1, A2, A3, A4 are greater than the pressure level of the pressure accumulation tank 50, the control unit ECU controls the inlet and outlet on-off valves 71, 72, the tank on-off valves 81, 82, and the wheel on-off valves 61, 62, 63, 64 to be opened, similarly to the inlet and outlet on-off valves 71, 72, the tank on-off valves 81, 82, and the wheel on-off valves 61, 62, 63, 64 shown in Fig. 2. In this case (in a case where the pressure levels within the air spring devices A1, A2, A3, A4 are greater than the pressure level within the pressure accumulation tank 50), unlike Fig. 2, the compressed air filled in the air spring devices A1, A2, A3, A4 is supplied to the pressure accumulation tank 50 via the inlet and outlet flow passage P2 and inlet and outlet flow passages P3, P4. In a case where the pressure level within the pressure accumulation tank 50 is desired to be further boosted, as shown in Fig. 4, the control unit ECU controls the tank on-off valve 81 and the inlet and outlet on-off valve 72 to be opened, and controls the tank on-off valve 82 and the inlet and outlet on-off valve V71 to be closed. Because the exterior compressed air source 9 is removed from the pressure accumulation tank 50 when air within the pressure accumulation tank 50 or air within the air spring device A1, A2, A3, A4 comes to be greater than the predetermined pressure level, the pressure level control operated only by the control unit ECU may be smoothly shifted. In a case where the exterior compressed air source 9 is removed from the pressure accumulation tank 50 to reset the pressure accumulation tank 50 to a normal state after supplying the compressed air, the high-pressure compressed air filled in the air spring devices A1, A2, A3, A4 is supplied to the pressure accumulation tank 50. In a case where the compressed air is required to be further boosted by the compressor device CMP, the high-pressure compressed air filled in the air spring devices A1, A2, A3, A4 is introduced to the compressor device CMP. Accordingly, the outlet efficiency of the compressor device CMP may be further favorable.

Accordingly, as shown in thin arrows in Fig. 4, the discharged air of the compressor device CMP is filled within the pressure accumulation tank 50 via the inlet and outlet flow passage P1, the open tank on-off valve 81 and the inlet and outlet flow passage P3. Here, because the compressed air within the air spring devices A1, A2, A3, A4 is introduced to the back pressure introduction port BP of the compressor device CMP via the inlet and outlet flow passage P2, the open inlet and outlet on-off valve 72, and the circulated flow passage P5, the compressed air within the pressure accumulation tank 50 is efficiently and promptly boosted. Accordingly, the pressure accumulation tank 50 is controlled to have the pressure level (for example, the third predetermined pressure level) greater than the pressure level of the exterior compressed air source 9.

The compressed air within the air spring devices A1, A2, A3, A4 is sent to the pressure accumulation tank 50 until a predetermined vehicle height is established. In a case where the pressure level within the pressure accumulation tank 50, that is, the detected pressure level of the pressure sensor PS1 comes to be greater than the third predetermined pressure level, the control unit ECU controls the tank on-off valve 81 and the outlet valve 5 to be closed. Accordingly, the compressed air within the pressure accumulation tank 50 is discharged to an outside air via the inlet and outlet flow passage P3, the tank on-off valve 81, the inlet and outlet flow passage P1, the orifice 6, the dryer 3, and the outlet valve 5. On the other hand, in a case where the detected pressure level of the pressure sensor PS1 comes to be lower than the third predetermined pressure level, and in a case where the compressed air is desired to be supplied and accumulated within the pressure accumulation tank 50, the control unit ECU controls the electric motor 1 to be operated while controlling the tank on-off valve 81 to be opened. The air flowing from the air inlet port AP is compressed by the pump device 2. Then, the compressed air is discharged from the outlet port OP via the dryer 3 and the check valve 4, and is supplied to the pressure accumulation tank 50 via the open tank on-off valve 81. Accordingly, in a case where the detected pressure level of the pressure sensor PS1 comes to be greater than the third predetermined pressure level, the control unit ECU controls the tank on-off valve 81 to be closed and controls the electric motor 1 to stop operating.

As above, the exterior compressed air source 9 supplies the compressed air to the pressure accumulation tank 50 by using the pressure source having a pressure level lower than the pressure level of air (for example, the compressed air within a general factory) that is to be supplied to the air spring devices A1, A2, A3, A4. Because the compressed air is boosted by the compressor device CMP and is filled in the air chambers 11, 12, 13, 14 of the air spring devices A1, A2, A3, A4, each of the air spring devices A1, A2, A3, A4 works as a pressure accumulating chamber and the high-pressure compressed air that is desired by the pressure accumulation tank 50 may be secured. Because the air introduced to the compressor device CMP corresponds to the compressed air supplied from the exterior compressed air source 9 to the pressure accumulation tank 50, the compressed air may be boosted efficiently and promptly.

In a case where the exterior compressed air source 9 is removed from the pressure accumulation tank 50 to reset the pressure accumulation tank 50 to a normal state after supplying the compressed air, the high-pressure compressed air filled in the air spring devices A1, A2, A3, A4 is supplied to the pressure accumulation tank 50. In a case where the compressed air is required to be further boosted by the compressor device CMP, the high-pressure compressed air filled in the air spring devices A1, A2, A3, A4 is introduced to the compressor device CMP. Accordingly, the outlet efficiency of the compressor device CMP may be favorable. In this case, because the drying agent does not have to be regenerated by the dryer 3, the compressed air may be further efficiently and promptly boosted.

## Claims

1. An air suspension device, comprising:
an air spring device (A1, A2, A3, A4) configured to be mounted on a wheel of a vehicle, the air spring device (A1, A2, A3, A4) including an air chamber (11, 12, 13, 14);
a compressor device (CMP) including an outlet port (OP) and a back pressure introduction port (BP), the compressor device (CMP) compressing air and discharging the compressed air from the outlet port (OP);
a pressure accumulation tank (50) accumulating air;
a first inlet and outlet on-off valve (71) being provided at a first inlet and outlet flow passage (P1) that is disposed between a control valve (61, 62, 63, 64) and the compressor device (CMP);
the control valve (61, 62, 63, 64) being provided at a second inlet and outlet flow passage (P2),
a first tank on-off valve (81) being provided at a third inlet and outlet flow passage (P3) that is disposed between the pressure accumulation tank (50) and the outlet port (OP) of the compressor device (CMP);
a second inlet and outlet on-off valve (72) being provided at a fourth inlet and outlet flow passage (P4) that is disposed between the control valve (61, 62, 63, 64) and the pressure accumulation tank (50);
a second tank on-off valve (82) being provided at the fourth inlet and outlet flow passage (P4) that is disposed between the control valve (61, 62, 63, 64) and the pressure accumulation tank (50);
a circulation flow passage (P5) communicatingly connecting the second inlet and outlet on-off valve (72) and the second tank on-off valve (82) to the back pressure introduction port (BP) of the compressor device (CMP);
a control unit (ECU) controlling an opening and a closing of the control valve (61, 62, 63, 64), the first and second inlet and outlet on-off valves (71, 72), and the first and second tank on-off valves (81, 82); and
an exterior compressed air source (9) being removable from the pressure accumulation tank (50), the exterior compressed air source (9) supplying the compressed air to the pressure accumulation tank (50), the exterior compressed air source (9) supplying the compressed air having a pressure level lower than a pressure level of air that is to be supplied to the air spring device (A1, A2, A3, A4); wherein
the first and second inlet and outlet passages (P1, P2) communicatingly connect the outlet port (OP) of the compressor device (CMP) to the air chamber (11, 12, 13, 14);
the exterior compressed air source (9) is mounted on the pressure accumulation tank (50) to supply the compressed air; and
the control unit (ECU) controls the compressor device (CMP) to boost air pressure within the pressure accumulation tank (50) to fill the air spring device (A1, A2, A3, A4) with the compressed air,
**characterized in that**
the pressure accumulation tank (50) is provided with a check valve (51) and in a case where the compressed air is desired to be supplied to the pressure accumulation tank (50) by the exterior compressed air source (9), the exterior compressed air source (9) is connected to the check valve (51), and **in that**
the control unit (ECU) controls the first and second inlet and outlet on-off valves (71, 72), the first and second tank on-off valves (81, 82), and the control valve (61, 62, 63, 64) to supply at least compressed air within the air spring device (A1, A2, A3, A4) to the pressure accumulation tank (50) when a pressure level of air within the air spring device (A1, A2, A3, A4) comes to be greater than a predetermined pressure level, or when a vehicle height value comes to be greater than a predetermined value.

2. The air suspension device according to claim 1, further comprising:
a dryer (3) being disposed between the exterior compressed air source (9) and the pressure accumulation tank (50), the dryer (3) removing moisture of the compressed air.

3. The air suspension device according to either claim 1 or 2, wherein
the control valve (61, 62, 63, 64) is provided at the second inlet and outlet flow passage (P2);
the first and second inlet and outlet passages (P1, P2) communicatingly connect the air chamber (11, 12, 13, 14) of the air spring device (A1, A2, A3, A4) being mounted on the wheel to the outlet port (OP) of the compressor device (CMP); and
the control valve (61, 62, 63, 64) serves as a wheel on-off valve opening and closing the inlet and outlet flow passage (P2).

## Patentansprüche

1. Luftfederungsvorrichtung mit:
einer Luftfedervorrichtung (A1, A2, A3, A4), welche konfiguriert ist, um an einem Rad eines Fahrzeugs montiert zu werden, wobei die Luftfedervorrichtung (A1, A2, A3, A4) eine Luftkammer (11, 12, 13, 14) aufweist;
einer Kompressorvorrichtung (CMP) mit einem Auslassanschluss (OP) und einem Gegendruckeinleitanschluss (BP), wobei die Kompressorvorrichtung (CMP) Luft komprimiert und die komprimierte Luft aus dem Auslassanschluss (OP) auslässt;
einem Drucksammeltank (50), welcher Luft sammelt;
einem ersten Einlass- und Auslass-Einschaltventil (71), welches in einer ersten Einlass- und Auslassströmungspassage (P1) bereitgestellt ist, welche zwischen einem Steuerungsventil (61, 62, 63, 64) und der Kompressorvorrichtung (CMP) angeordnet ist;
dem Steuerungsventil (61, 62, 63, 64), welches in einer zweiten Einlass- und Auslassströmungspassage (P2) bereitgestellt ist,
einem Tank-Einschaltventil (81), welches in einer dritten Einlass- und Auslassströmungspassage (P3) bereitgestellt ist, welche zwischen dem Drucksammeltank (50) und dem Auslassanschluss (OP) der Kompressorvorrichtung (CMP) angeordnet ist;
einem zweiten Einlass- und Auslass-Einschaltventil (72), welches in einer vierten Einlass- und Auslassströmungspassage (P4) bereitgestellt ist, welche zwischen dem Steuerungsventil (61, 62, 63, 64) und dem Drucksammeltank (50) angeordnet ist;
einem zweiten Tank-Einschaltventil (82), welches in der vierten Einlass- und Auslassströmungspassage (P4) bereitgestellt ist, welche zwischen dem Steuerungsventil (61, 62, 63, 64) und dem Drucksammeltank (50) angeordnet ist;
einer Zirkulationsströmungspassage (P5) welche das zweite Einlass- und Auslass-Einschaltventil (72) und das zweite Tank-Einschaltventil (82) mit dem Gegendruckeinleitanschluss (BP) der Kompressorvorrichtung (CMP) kommunizierend verbindet;
einer Steuerungseinheit (ECU) welche ein Öffnen und ein Schließen des Steuerungsventils (61, 62, 63, 64), des ersten und zweiten Einlass- und Auslass-Einschaltventils (71, 72) und des ersten und zweiten Tank-Einschaltventils (81, 82) steuert; und
einer externen Druckluftquelle (9), welche von dem Drucksammeltank (50) abnehmbar ist, wobei die externe Druckluftquelle (9) dem Drucksammeltank (50) die komprimierte Luft zuführt, wobei die externe Druckluftquelle (9) die komprimierte Luft zuführt, welche ein niedrigeres Druckniveau hat, als ein Druckniveau von Luft, welche der Luftfedervorrichtung (A1, A2, A3, A4) zuzuführen ist; wobei
die erste und zweite Einlass- und Auslass Passage (P1, P2) den Auslassanschluss (OP) der Kompressorvorrichtung (CMP) mit der Luftkammer (11, 12, 13, 14) kommunizierend verbinden;
die externe Druckluftquelle (9) an dem Drucksammeltank (50) montiert ist, um die Druckluft zuzuführen; und
die Steuerungseinheit (ECU) die Kompressorvorrichtung (CMP) steuert, um einen Luftdruck innerhalb des Drucksammeltanks (50) zu verstärken, um die Luftfedervorrichtung (A1, A2, A3, A4) mit der komprimierten Luft zu füllen,
**dadurch gekennzeichnet, dass**
der Drucksammeltank (50) mit einem Rückschlagventil (51) versehen ist und in einem Fall, in welchem die komprimierte Luft dem Drucksammeltank (50) durch die externe Druckluftquelle (9) zugeführt werden soll, die externe Druckluftquelle (9) mit dem Rückschlagventil (51) verbunden ist, und dadurch, dass
die Steuerungseinheit (ECU) das erste und zweite Einlass- und Auslass-Einschaltventil (71, 72), das erste und zweite Tank-Einschaltventil (81, 82) und das Steuerungsventil (61, 62, 63, 64) steuert, um dem Drucksammeltank (50) zumindest komprimierte Luft innerhalb der Luftfedervorrichtung (A1, A2, A3, A4) zuzuführen, wenn ein Druckniveau von Luft innerhalb der Luftfedervorrichtung (A1, A2, A3, A4) höher als ein vorbestimmtes Druckniveau wird oder wenn ein Fahrzeughöhenwert größer als ein vorbestimmter Wert wird.

2. Luftfederungsvorrichtung nach Anspruch 1, ferner mit:
einem Trockner (3), welcher zwischen der externen Druckluftquelle (9) und dem Drucksammeltank (50) angeordnet ist, wobei der Trockner (3) Feuchtigkeit aus der Druckluft entfernt.

3. Luftfederungsvorrichtung nach einem der Ansprüche 1 oder 2, wobei
das Steuerungsventil (61, 62, 63, 64) in der zweiten Einlass- und Auslassströmungspassage (P2) bereitgestellt ist;
die erste und zweite Einlass- und Auslasspassage (P1, P2) die Luftkammer (11, 12, 13, 14) der an dem Rad montierten Luftfedervorrichtung (A1, A2, A3, A4) mit dem Auslassanschluss (OP) der Kompressorvorrichtung (CMP) kommunizierend verbindet; und
das Steuerungsventil (61, 62, 63, 64) als ein Rad-Einschaltventil dient, welches die Einlass- und Auslassströmungspassage (P2) öffnet und schließt.

## Revendications

1. Dispositif de suspension pneumatique, comprenant :
un dispositif à amortissement pneumatique (A1, A2, A3, A4) configuré pour être monté sur une roue d'un véhicule, le dispositif à amortissement pneumatique (A1, A2, A3, A4) comprenant une chambre à air (11, 12, 13, 14) ;
un dispositif compresseur (CMP) comprenant un orifice de sortie (OP) et un orifice d'introduction de contre-pression (BP), le dispositif compresseur (CMP) comprimant l'air et déchargeant l'air comprimé depuis l'orifice de sortie (OP) ;
un réservoir d'accumulation de pression (50) accumulant de l'air ;
une première soupape d'ouverture-fermeture d'entrée et de sortie (71) étant ménagée au niveau d'un premier passage d'écoulement d'entrée et de sortie (P1) qui est disposé entre une soupape de commande (61, 62, 63, 64) et le dispositif compresseur (CMP);
la soupape de commande (61, 62, 63, 64) étant ménagée au niveau d'un deuxième passage d'écoulement d'entrée et de sortie (P2) ;
une première soupape d'ouverture-fermeture de réservoir (81) étant ménagée au niveau d'un troisième passage d'écoulement d'entrée et de sortie (P3) qui est disposé entre le réservoir d'accumulation de pression (50) et l'orifice de sortie (OP) du dispositif compresseur (CMP) ;
une seconde soupape d'ouverture-fermeture d'entrée et de sortie (72) étant ménagée sur un quatrième passage d'écoulement d'entrée et de sortie (P4) qui est disposé entre la soupape de commande (61, 62, 63, 64) et le réservoir d'accumulation de pression (50) ;
une seconde soupape d'ouverture-fermeture de réservoir (82) étant ménagée au niveau du quatrième passage d'écoulement d'entrée et de sortie (P4) qui est disposé entre la soupape de commande (61, 62, 63, 64) et le réservoir d'accumulation de pression (50) ;
un passage d'écoulement de circulation (P5) reliant par communication la seconde soupape d'ouverture-fermeture d'entrée et de sortie (72) et la seconde soupape d'ouverture-fermeture de réservoir (82) à l'orifice d'introduction de pression arrière (BP) du dispositif compresseur (CMP) ;
une unité de commande (ECU) commandant une ouverture et une fermeture de la soupape de commande (61, 62, 63, 64), des première et seconde soupapes d'ouverture-fermeture d'entrée et de sortie (71, 72) et des première et seconde soupapes d'ouverture-fermeture de réservoir (81, 82) ; et
une source d'air comprimé extérieure (9) pouvant être retirée du réservoir d'accumulation de pression (50), la source d'air comprimé extérieure (9) fournissant l'air comprimé à l'accumulateur de pression (50), la source d'air comprimé extérieure (9) fournissant l'air comprimé ayant un niveau de pression inférieur à un niveau de pression d'air devant être fourni au dispositif à amortissement pneumatique (A1, A2, A3, A4) ; dans lequel
les premier et deuxième passages d'entrée et de sortie (P1, P2) relient par communication l'orifice de sortie (OP) du dispositif compresseur (CMP) à la chambre à air (11, 12, 13, 14) ;
la source d'air comprimé extérieure (9) est montée sur le réservoir d'accumulation de pression (50) pour fournir l'air comprimé ; et
l'unité de commande (ECU) commande le compresseur (CMP) pour augmenter la pression d'air dans le réservoir d'accumulation de pression (50) pour remplir le dispositif à amortissement pneumatique (A1, A2, A3, A4) avec de l'air comprimé ;
**caractérisé en ce que**
le réservoir d'accumulation de pression (50) est muni d'un clapet anti-retour (51) et dans le cas où il est souhaité que l'air comprimé soit amené au réservoir d'accumulation de pression (50) par la source d'air comprimé extérieure (9), la source d'air comprimé extérieure (9) est reliée au clapet anti-retour (51) ; et **en ce que**
l'unité de commande (ECU) commande les première et seconde soupapes d'ouverture-fermeture d'entrée et de sortie (71, 72), les première et seconde soupapes d'ouverture-fermeture de réservoir (81, 82) et la soupape de commande (61, 62, 63, 64) pour au moins fournir de l'air comprimé dans le dispositif à amortissement pneumatique (A1, A2, A3, A4) au réservoir d'accumulation de pression (50) lorsqu'un niveau de pression d'air dans le dispositif à amortissement pneumatique (A1, A2, A3, A4) devient supérieur à un niveau de pression prédéterminé, ou lorsque la valeur de la hauteur du véhicule devient supérieure à une valeur prédéterminée.

2. Dispositif de suspension pneumatique selon la revendication 1, comprenant en outre :
un dispositif de séchage (3) disposé entre la source d'air comprimé extérieure (9) et le réservoir d'accumulation de pression (50), le dispositif de séchage (3) éliminant l'humidité de l'air comprimé.

3. Dispositif de suspension pneumatique selon la revendication 1 ou 2, dans lequel
la soupape de commande (61, 62, 63, 64) est ménagée au niveau du deuxième passage d'écoulement d'entrée et de sortie (P2) ;
les premier et deuxième passages d'entrée et de sortie (P1, P2) relient en communication la chambre à air (11, 12, 13, 14) du dispositif à amortissement pneumatique (A1, A2, A3, A4) qui est monté sur la roue à l'orifice de sortie (OP) du compresseur (CMP) ; et
la soupape de commande (61, 62, 63, 64) sert de soupape d'ouverture-fermeture de roue ouvrant et fermant le passage d'écoulement d'entrée et de sortie (P2).
